Europäisches Patentamt

European Patent Office

Office européen des brevets

(19)

(11) Numéro de publication : **0 066 573
B1**

# (12) FASCICULE DE BREVET EUROPÉEN

(45) Date de publication du fascicule du brevet :
**21.11.85**

(21) Numéro de dépôt : **81903123.8**

(22) Date de dépôt : **20.11.81**

(86) Numéro de dépôt international :
**PCT/CH 81/00130**

(87) Numéro de publication internationale :
**WO/8202101 (24.06.82 Gazette 82/16)**

(51) Int. Cl.⁴ : **G 05 D 11/03, G 05 D 11/13,
B 01 F 15/04**

(54) **DISPOSITIF POUR LE CONTROLE DU MELANGE ET DU DEBIT D'AU MOINS DEUX FLUIDES.**

(30) Priorité : **16.12.80 CH 9257/80**

(43) Date de publication de la demande :
**15.12.82 Bulletin 82/50**

(45) Mention de la délivrance du brevet :
**21.11.85 Bulletin 85/47**

(84) Etats contractants désignés :
**AT DE FR GB NL SE**

(56) Documents cités :
**FR-A- 2 162 041
FR-A- 2 199 387
FR-A- 2 216 013
GB-A-    963 232
GB-A- 1 577 506**

(73) Titulaire : **LN INDUSTRIES S.A.
2 Rue des Falaises
CH-1211 Geneve 8 (CH)**

(72) Inventeur : **ROCHAT, Jean-Denis
126 Route de St. Julien
CH-1228 Plan-les-Ouates (CH)**
Inventeur : **ZELLWEGER, Conrad
5, chemin des Voirons
CH-1224 Chène-Bougeries (CH)**

(74) Mandataire : **Ardin, Pierre et al
PIERRE ARDIN & CIE 22, rue du Mont-Blanc
CH-1211 Genève 1 (CH)**

Jouve, 18, rue St-Denis, 75001 Paris, France

## Description

On a de plus en plus besoin, pour des applications médicales, scientifiques ou industrielles de mélanges de gaz ayant une composition déterminée. La plupart du temps il s'agit de mélanges à deux composants et il existe actuellement sur le marché des appareils permettant à partir de gaz unitaires de faire les mélanges de gaz dans les proportions requises pour l'application envisagée.

Le brevet britannique 1 577 506 décrit un dispositif pour le mélange de deux fluides gazeux comprenant une conduite d'arrivée pour chacun des deux fluides, un dispositif régulateur de pression permettant de délivrer chacun des deux fluides sous une pression déterminée à un étranglement qui lui est propre, chacun des deux étranglements étant de section réglable et débouchant dans une chambre de mélange, des moyens permettant de faire varier la section des étranglements de zéro à un maximum, ledit dispositif comprenant en outre deux organes de contrôle, l'un de ces organes assurant le contrôle du débit total du mélange des fluides par une commande agissant sur les deux étranglements et faisant varier leur section libre dans le même sens à partir de zéro et selon un facteur de proportionnalité linéaire entre les deux sections, l'autre organe assurant le contrôle du rapport du mélange par une commande agissant sur les deux étranglements et faisant varier leur section libre en sens inverse l'une de l'autre et selon le même facteur de proportionnalité linéaire entre les deux sections.

Le brevet britannique 963 232 concerne également un dispositif de ce genre. Ce dernier dispositif ne permet de régler facilement le débit total du gaz qu'en agissant sur la pression d'arrivée des gaz au dispositif, ce qui est peu pratique puisqu'il faut agir sur deux détendeurs de pression et qu'un léger écart entre les réglages de ces deux détendeurs a une influence sur la proportion du mélange des gaz.

Le brevet français 2 199 387 se rapporte à un mitigeur permettant de mélanger de l'eau chaude et de l'eau froide afin d'obtenir la température de sortie désirée. Ce mitigeur comporte un corps auquel sont raccordées une canalisation principale de sortie, les deux canalisations secondaires d'entrée et une manette de réglage à deux sens de déplacement réglant indépendamment le débit de sortie et le rapport des deux débits d'entrée, les deux canalisations secondaires et la canalisation principale étant respectivement en communication avec deux orifices secondaires et un orifice principal. les deux orifices secondaires de forme rectangulaire à bords parallèles et coplanaires sont ménagés dans une première plaque et l'orifice principal de forme également rectangulaire, à bords parallèles à ceux des deux orifices secondaires, est ménagé dans une seconde plaque parallèle et adjacente à la première. Des moyens reliés à la manette provoquent un glissement relatif des deux plaques suivant deux directions perpendiculaires respectivement parallèles aux bords des orifices selon qu'on déplace la manette dans une direction ou dans l'autre. Le dispositif selon le brevet français précité se rapporte à un domaine technique bien différent et ne propose pas de solution pour mélanger deux gaz différents dans une proportion bien déterminée tout en obtenant un débit total également bien déterminé.

L'invention a pour but de fournir un dispositif pour le mélange des gaz, dispositif qui est rigoureusement exact dans le réglage de la proportion des gaz et du débit total de ceux-ci, c'est-à-dire sans que la modification d'un réglage n'influence l'autre réglage.

L'invention a pour objet un dispositif de mélange de deux gaz sous pression, comprenant une conduite d'arrivée pour chacun des deux gaz, un dispositif régulateur de pression permettant de délivrer chacun des deux gaz sous une pression déterminée à un étranglement réglable qui lui est propre, les deux étranglements débouchant dans une chambre de mélange à travers deux orifices ménagés dans une platine formant une paroi de cette chambre, un dispositif d'obturation étant déplaçable parallèlement à ladite platine, les parties superposées du dispositif d'obturation et des orifices de la platine constituant lesdits étranglements, les orifices de la platine étant en forme de parallélogramme dont les côtés sont orientés suivant deux directions, deux organes de contrôle, coopérant avec une graduation, commandant chacun le déplacement du dispositif d'obturation suivant l'une et respectivement l'autre des deux dites directions, un des organes assurant le contrôle du débit total du mélange en faisant varier la section libre des orifices dans le même sens à partir de zéro et selon un facteur de proportionnalité linéaire entre les deux sections, l'autre organe assurant le contrôle du rapport du mélange en faisant varier lesdites sections libres en sens inverse l'une de l'autre et selon le même facteur de proportionnalité linéaire entre les deux sections, les deux conduites étant contrôlées par un régulateur de pression différentiel compris dans ledit dispositif régulateur de pression et comprenant des moyens pour régler à la valeur désirée le rapport des pressions des deux fluides en amont desdits étranglements.

Selon une solution parallèle, l'invention concerne également un dispositif qui comporte une conduite d'arrivée pour chacun des deux gaz, un dispositif régulateur de pression permettant de délivrer chacun des deux gaz sous une pression déterminée à un étranglement réglable qui lui est propre, les deux étranglements débouchant dans une chambre de mélange à travers deux orifices ménagés dans une platine formant une paroi de cette chambre, un dispositif d'obturation étant déplaçable parallèlement à ladite platine, les parties superposées du dispositif d'obturation et des orifices de la platine constituant lesdits étranglements, les orifices de la platine étant en forme de parallèlogramme dont les côtés sont orientés suivant deux directions, deux organes de contrôle, coopérant avec une graduation, commandant chacun le déplacement du dispositif d'obturation suivant l'une et respectivement l'autre des deux dites directions, un des organes assurant le contrôle du débit total du mélange en faisant varier la section libre des orifices dans le même sens à partir de zéro et selon un facteur de proportionnalité linéaire entre les deux sections, l'autre organe assurant le contrôle du rapport du mélange en faisant varier lesdites sections libres en sens inverse l'une de l'autre et selon le même facteur de proportionnalité linéaire entre les deux sections, le dispositif d'obturation étant muni de deux plaquettes distinctes, chaque plaquette présentant une ouverture, des moyens étant prévus pour déplacer chacune de ces plaquettes suivant chacune desdites directions, des moyens de réglage du facteur de proportionnalité permettant de tenir compte des coefficients d'écoulement des fluides à mélanger.

Le but précisé est obtenu grâce au fait que le dispositif comprend deux organes de contrôle, l'un de ces organes assurant le contrôle du débit total du mélange des fluides par une commande agissant sur les deux étranglements et faisant varier leur section libre dans le même sens à partir de zéro et selon un facteur de proportionnalité linéaire entre les deux sections, l'autre organe assurant le contrôle du rapport du mélange par une commande agissant sur les deux étranglements et faisant varier leur section libre en sens inverse l'une de l'autre et selon le même facteur de proportionnalité linéaire entre les deux sections.

Le dessin annexé illustre schématiquement et à titre d'exemple, plusieurs formes d'exécution du dispositif mélangeur, objet de l'invention.

Les figures 1 et 2 montrent deux schémas de principe de l'appareil.

La figure 3 illustre un exemple de réalisation mécanique.

La figure 4 montre un dispositif à commande électronique.

La figure 5 montre une variante de commande mécanique.

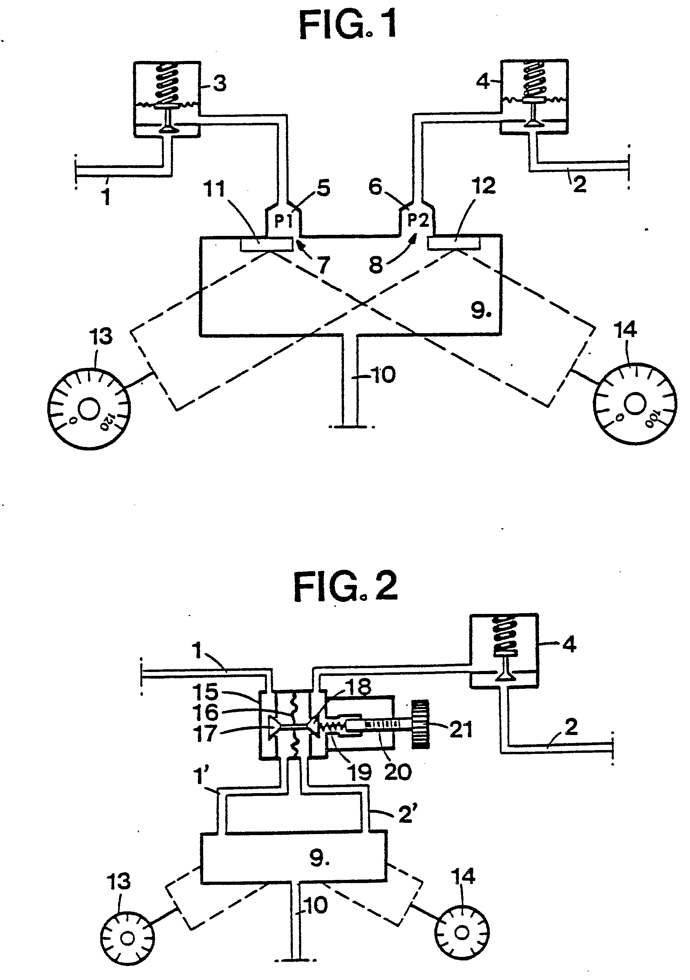

La fig. 1 illustre le schéma de principe d'un dispositif comprenant deux conduites 1 et 2 pour l'amenée de deux gaz différents à mélanger. Chacune de ces conduites est associée à un détendeur ou régulateur de pression 3, respectivement 4. Les deux gaz sont ainsi admis dans deux chambres 5 et 6 débouchant par des étranglements 7 et 8 dans une chambre de mélange 9 munie d'une conduite de sortie 10 pour le gaz mélangé.

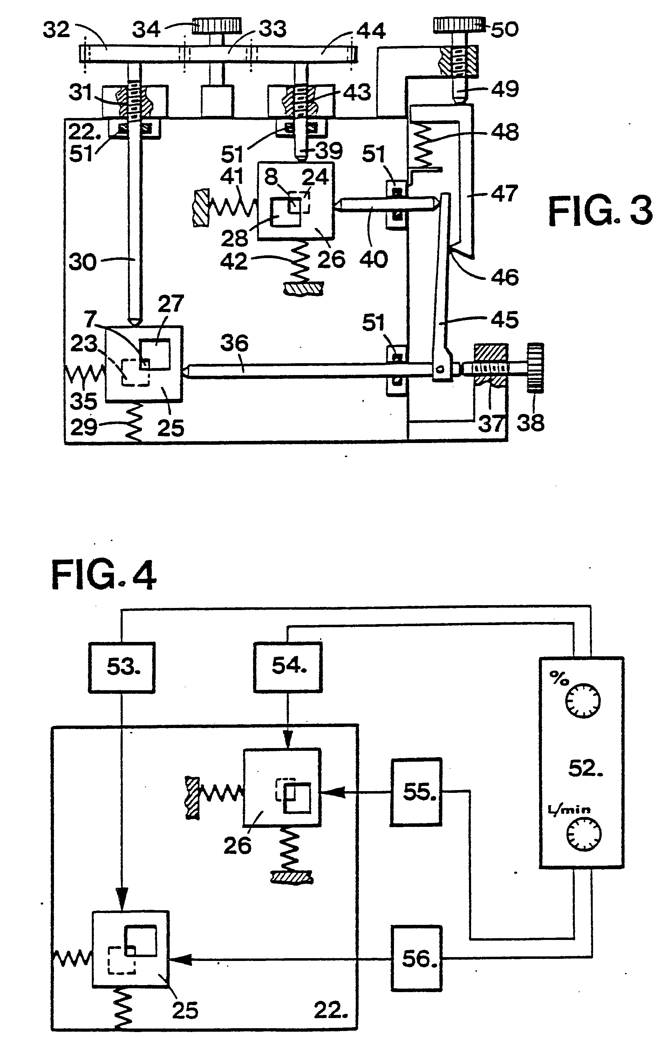

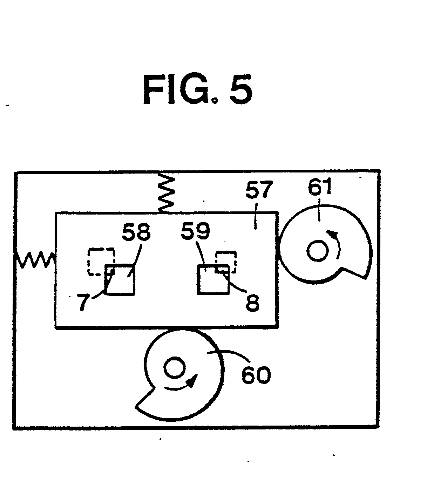

Les étranglements 7 et 8 ont une section variable qui peut être modifiée par des obturateurs 11, respectivement 12. Ces obturateurs sont commandés par deux organes de commande 13 et 14 de façon telle que l'organe de commande 13 produise une variation de la somme des sections des étranglements 7 et 8 sans modifier le rapport entre ces sections. L'autre organe 14 produit une variation du rapport entre les sections des étranglements sans modifier la somme de ces sections. Des moyens permettant d'obtenir une telle commande seront décrits plus loin en référence aux figures 3 et 5.

La fig. 2 illustre une variante de la disposition de principe décrite à la fig. 1. Suivant la fig. 2, seule la conduite 2 est munie d'un régulateur de pression 4. Les conduites 1 et 2 aboutissent à un détendeur différentiel 15 permettant de fixer à volonter le rapport des pressions des deux gaz sortant par les conduites 1' et 2' pour parvenir dans la chambre de mélange 9.

Le détendeur différentiel 15 comprend une membrane 16 dont les faces sont soumises respectivement à la pression du premier et du deuxième gaz. Cette membrane 16 porte deux organes d'obturation 17 et 18 contrôlant le passage du premier et du deuxième gaz. Les organes d'obturation 17 et 18 sont rigidement reliés l'un à l'autre et soumis à l'action d'un ressort 19 dont la tension peut être réglée par une vis 20 munie d'une tête moletée 21.

La disposition selon la fig. 2 présente un grand intérêt car elle permet d'utiliser un même appareil pour le mélange de gaz de nature différente. On sait en effet que le débit d'un gaz dans une conduite présentant un diaphragme, c'est-à-dire une paroi mince présentant un trou, est proportionnel à la différence de pression $\Delta P$ en amont et en aval de ce diaphragme, à la section du trou et à un coefficient C qui dépend notamment des caractéristiques physiques du gaz. Il en résulte que si un appareil a été prévu pour être utilisé avec deux gaz déterminés et que l'on remplace l'un des gaz par un autre de caractéristiques physiques différentes, la proportion du mélange ne correspondra plus à la graduation de l'appareil. Le détendeur différentiel réglable permet de modifier le rapport de pression des deux gaz pour compenser la variation du débit dû au changement du coefficient C.

La fig. 3 montre une forme d'exécution du dispositif dans laquelle une platine 22 présente deux ouvertures 23 et 24 de section carrée prévues pour le passage des deux gaz à mélanger. Cette platine constitue une paroi de la chambre 9 de la fig. 1 et les ouvertures 23 et 24 permettent la communication de la chambre 9 avec les chambres 5 et 6 de la fig. 1. Les obturateurs sont constitués par des plaquettes 25 et 26 présentant chacune une ouverture carrée 27, respectivement 28. La plaque 25 peut être déplacée verticalement contre l'action d'un ressort 29 par un poussoir 30 déplaçable axialement par une portion filetée 31 commandée par une roue dentée 32 en prise avec un pignon denté 33 solidaire d'un organe de manœuvre 34 de commande de la proportion du mélange de gaz. Cette même plaquette 25 peut être déplacée horizontalement contre l'action d'un ressort 35 par un poussoir 36 déplaçable axialement grâce à un pas de vis 37 et à un organe de manœuvre 38 destiné à régler le débit total du mélange de gaz.

De même la plaquette 26 peut être déplacée verticalement et horizontalement par deux poussoirs 39 et 40 agissant contre l'action de ressorts 41 et 42. Le poussoir 39 présente un pas de vis 43 et une roue dentée 44 en prise avec le pignon 33. Le poussoir 40 est actionné par un levier 45 sur l'extrémité d'une pièce 47 poussée élastiquement par un ressort 48 contre l'extrémité d'une vis de réglage 49. En agissant sur la tête moletée 50 de cette vis 49, il est possible de déplacer le point de pivotement 46 du levier 45 et de modifier par conséquent le rapport entre les déplacements des poussoirs 36 et 40. Tout le mécanisme de commande des poussoirs 30, 36, 39 et 40 est disposé à l'extérieur de la chambre 9 et chaque poussoir coulisse dans un joint d'étanchéité 51.

Lorsque l'on agit sur la tête moletée 34, on provoque un déplacement dans le même sens des poussoirs 30 et 39. Lorsque l'on déplace ceux-ci vers le haut, ce qui entraîne un déplacement correspondant des plaquettes 25 et 26, l'étranglement 7, qui est constitué par les portions superposées des ouvertures 23 et 27, diminue jusqu'à ce que sa section devienne nulle. A ce moment, la plaquette 26 s'est également déplacée jusqu'à ce que la hauteur de l'étranglement 8, qui est déterminée par les portions superposées des ouvertures 24 et 28, présente une valeur maximum. En déplaçant les poussoirs 30 et 39 vers le bas, on provoque au contraire la fermeture de l'étranglement 8 jusqu'à ce que sa section soit nulle tandis que la section de l'étranglement 7 augmente jusqu'à ce qu'elle atteigne la hauteur de l'ouverture 23. Il est ainsi possible de régler le rapport de mélange des gaz sur toute la gamme possible entre zéro et 100 %.

Par suite de la bascule formée par le levier 45, les poussoirs 36 et 40 se déplacent toujours en sens inverse l'un de l'autre. En déplaçant le poussoir 40 vers la gauche et le poussoir 36 vers la droite, on atteint la fermeture complète des étranglements 7 et 8 lorsque les arêtes des ouvertures sont superposées.

En agissant sur la molette 50, on déplace le point de pivotement 46 du levier 45 de sorte que l'on modifie le facteur de proportionnalité linéaire entre les déplacements des plaquettes 25 et 26, ce qui permet d'adapter la variation de la section de passage des étranglements aux coefficients de l'écoulemnt des gaz contrôlés par ces étranglements. Ces coefficients d'écoulement est fonction de la pression appliquée à cet étrangelement et du coefficient C du fluide. D'autre part, on pourrait adapter la variation de la section de passage des étranglements en changeant les rapports des pignons 32 et 44.

La fig. 4 illustre schématiquement une autre forme d'exécution dans laquelle la commande est réalisée électroniquement en utilisant un microprocesseur contenu dans une centrale 52. Cette centrale envoie des impulsions de commande à quatre moteurs pas à pas 53 et 56 qui agissent sur des plaquettes d'obturation 25 et 26 de même genre que celles représentées à la fig. 3. Cette commande électronique permet une grande souplesse dans la réalisation. Ainsi on peut sans autre prévoir que le contrôle du débit soit effectué par un déplacement vertical d'une des plaquettes en conjugaison avec un déplacement horizontal de l'autre plaquette, la proportion du mélange étant alors réglée par des déplacements horizontaux et respectivement verticaux de ces plaquettes.

La fig. 5 montre une réalisation mécanique dans laquelle les étranglements sont contrôlés par une seule plaquette d'obturation 57 présentant deux ouvertures rectangulaires 58 et respectivement 59. Le débit total de gaz est contrôlé à l'aide d'une came 60 qui provque des déplacements verticaux de la plaquette 57. La proportion du mélange est réglée au moyen d'une came 61 qui provoque des variations en sens inverse des sections de l'étranglement. Toutefois, cette construction n'est valable que lorsque les deux coefficients d'écoulement des deux fluides sont identiques.

Dans les formes d'exécution décrites, il est avantageux que la pression des gaz en amont des étranglements soit suffisamment élevée pour que l'écoulement du gaz se fasse en régime sonique. Dans ces conditions, le débit massique au travers de l'étranglement devient indépendant de la pression régnant en aval de cet étranglement.

On peut bien entendu prévoir de nombreuses variantes du dispositif décrit. Il y a lieu de remarquer que les ouvertures ont toujours été représentées de forme rectangulaire. Elles pourraient cependant sans autre être en forme parallèlogramme, les côtés de toutes ces ouvertures étant orientés suivant deux directions, le dispositif d'obturation étant agencé pour commander des déplacements de ses propres ouvertures suivant l'une et l'autre de ces deux directions.

Il est clair que l'on peut effectuer le mélange de plus de deux fluides en branchant en cascade plusieurs dispositifs du type décrit.

**Revendications**

1. Dispositif de mélange de deux gaz sous pression, comprenant une conduite d'arrivée (1, 2) pour chacun des deux gaz, un dispositif régulateur de pression (3, 4 ; 15) permettant de délivrer chacun des deux gaz sous une pression déterminée à un étranglement (7, 8) réglable qui lui est propre, les deux étranglements débouchant dans une chambre de mélange (9) à travers deux orifices (23, 24) ménagés dans une platine (22) formant une paroi de cette chambre, un dispositif d'obturation (11, 12 ; 25, 26 ; 57) étant déplaçable parallèlement à ladite platine, les parties superposées du dispositif d'obturation et des orifices de la platine constituant lesdits étranglements (7, 8), les orifices (23, 24) de la platine étant en forme de parallèlogramme dont les côtés sont orientés suivant deux directions, deux organes de contrôle (34, 38), coopérant avec une graduation, commandant chacun le déplacement du dispositif d'obturation suivant l'une et respectivement l'autre des deux dites directions, un des organes assurant le contrôle du débit total du mélange en faisant varier la section libre des orifices (23, 24) dans le même sens à partir de zéro et selon un facteur de proportionnalité linéaire entre les deux sections, l'autre organe assurant le contrôle du rapport du mélange en faisant varier lesdites sections libres en sens inverse l'une de l'autre et selon le même facteur de proportionnalité linéaire entre les deux sections, les deux conduites d'arrivée étant contrôlées par un régulateur de pression différentiel (15) compris dans ledit dispositif régulateur de pression (3, 4 ; 15) et comprenant des moyens pour régler à la valeur désirée le rapport des pressions des deux fluides en amont desdits étranglements.

2. Dispositif de mélange de deux gaz sous pression, comprenant une conduite d'arrivée (1, 2) pour chacun des deux gaz, un dispositif régulateur de pression (3, 4) permettant de délivrer chacun des deux gaz sous une pression déterminée à un étranglement (7, 8) réglagle qui lui est propre, les deux étranglements débouchant dans une chambre de mélange (9) à travers deux orifices (23, 24) ménagés dans une platine (22) formant une paroi de cette chambre, un dispositif d'obturation (25, 26) étant déplaçable parallèlement à ladite platine, les parties superposées du dispositif d'obturation et des orifices de la platine constituant lesdits étranglements (7, 8), les orifices (23, 24) de la platine étant en forme de parallèlogramme dont les côtés sont orientés suivant deux directions, deux organes de contrôle, coopérant avec une graduation, commandant chacun le déplacement du dispositif d'obturation suivant l'une et respectivement l'autre des deux dites directions, un des organes assurant le contrôle du débit total du mélange en faisant varier la section libre des orifices (23, 24) dans le même sens à partir de zéro et selon un facteur de proportionnalité linéaire entre les deux sections, l'autre organe assurant le contrôle du rapport du mélange en faisant varier lesdites sections libres en sens inverse l'une de l'autre et selon le même facteur de proportionnalité linéaire entre les deux sections, le dispositif d'obturation étant muni de deux plaquettes distinctes (25, 26), chaque plaquette présentant une ouverture, des moyens (53, 56 ; 54, 55) étant prévus pour déplacer chacune de ces plaquettes suivant chacune desdites directions, des moyens (52) de réglage du facteur de proportionnalité permettant de tenir compte des coefficients d'écoulement des fluides à mélanger.

3. Dispositif selon la revendication 2, caractérisé en ce que lesdits moyens de commande des plaquettes comprennent des moteurs électriques pas à pas.

4. Dispositif selon la revendication 2, caractérisé en ce qu'il comprend des moyens mécaniques de coordination des déplacements des deux plaquettes dans chacune desdites directions.

5. Dispositif selon la revendication 4, caractérisé en ce que le déplacement des plaquettes est commandé par un poussoir soumis à l'action d'une vis à de manœuvre, ce poussoir étant relié à un autre poussoir de commande de l'autre plaquette par un dispositif à levier dont le rapport de transmission est réglable pour permettre de fixer un rapport de proportionnalité entre les déplacements de ces deux poussoirs.

**Claims**

1. Device for mixing two gases under pressure, comprising an inlet pipe (1, 2) for each of the two gases, a pressure regulating device (3, 4 ; 15) making it possible to deliver each of the two gases at a specific pressure to an adjustable constriction (7, 8) which is appropriate for it, the two constrictions being opened into a mixing chamber (9) through two orifices (23, 24) made in a plate (22) that forms a wall of this chamber, an obturation device (11, 12 ; 25, 26 ; 57) being movable parallel to said plate, the superposed parts of the obturation device and the orifices of the plate constituting said constrictions (7, 8), the orifices (23, 24) of the plate being in the shape of a parallelogram whose sides are oriented in two directions, two control elements (34, 38) cooperating with a calibration, each controlling the movement of the obturation device in the one or respectively other of said two directions, one of the elements providing the control of the total flow of the mixture by causing the free section of the orifices (23, 24) to vary in the same direction from zero and according to a factor of linear proportionality between the two sections, the other element providing the control of the ratio of the mixture by causing said free sections to vary in the opposite direction from each other and according to the same factor of linear proportionality between the two sections, the two inlet pipes being controlled by a differential pressure regulator (15) included in said pressure regulating device (3, 4 ; 15) and comprising means for regulating at the desired value the ratio of the pressures of the two fluids upstream from said constrictions.

2. Device for mixing two gases under pressure, comprising an inlet pipe (1, 2) for each of the two gases, a pressure regulating device (3, 4) making it possible to deliver each of the two gases at a specific pressure to an adjustable constriction (7, 8) which is appropriate for it, the two constrictions being opened into a mixing chamber (9) through two orifices (23, 24) made in a plate (22) that forms a wall of this chamber, an obturation device (25, 26) being movable parallel to said plate, the superposed parts of the obturation device and the orifices of the pate constituting said constrictions (7, 8), the orifices (23, 24) of the plate being in the shape of a parallelogram whose sides are oriented in two directions, two control elements cooperating with a calibration, each vice in the one or respectively other of said two directions, one of the elements providing the control of the total flow of the mixture by causing the free section of the orifices (23, 24) to vary in the same direction from zero and according to a factor of linear proportionality between the two sections, the other element providing the control of the ratio of the mixture by causing said free sections to vary in the opposite direction from each other and according to the same factor of linear proportionality between the two sections, the obturation device including two separate small plates (25, 26), each small plate having an opening, means (53, 56 ; 54, 55) being provided for moving each of these small plates in each of said directions, means (52) for regulating the factor of proportionality making it possible to take into account flow coefficients of the fluids to be mixed.

3. Device as in claim 2, characterized in that said means for controlling the small plates comprise step-by-step electric motors.

4. Device as in claim 2, characterized in that in comprises mechanical means for coordinating the movements of the two small plates in each of said directions.

5. Device as in claim 4, characterized in that the movement of the small plates is controlled by a push rod subjected to the action of an adjusting screw, this push rod being connected to another push rod for controlling the other small plate by a lever device whose speed ratio is adjustable to make it possible to fix a ratio of proportionality between the movements of these two push rods.

## Patentansprüche

1. Vorrichtung zum Mischen zweier unter Druck stehender Gase, umfassend eine Zuleitung (1, 2) für jedes der beiden Gase, eine Drucksteuerungsvorrichtung (3, 4 ; 15), die es ermöglicht, jedes der beiden Gase unter einem bestimmten Druck bei einem regulierbaren, in der Leitung vorgesehenen Durchlaß (7, 8) austreten zu lassen, wobei die beiden Durchlässe in eine Mischkammer (9) münden, und zwar über zwei in einer eine Seitenwand dieser Kammer bildenden Platte (22) vorgesehene Öffnungen (23, 24), eine Verschlußvorrichtung (11, 12 ; 25, 26 ; 57), die parallel zu der genannten Platte versetzbar ist, wobei die übereinanderliegenden Teile der Verschlußvorrichtung und die Öffnungen der Platte die genannten Durchlässe (7, 8) bilden, wobei die Öffnungen (23, 24) der Platte die Form eines Parallelogrammes haben, dessen Seiten in zwei Richtungen verlaufen, zwei mit einer Einstellvorrichtung zusammenwirkende Regelorgane (34, 38), die jeweils die Versetzung der Verschlußvorrichtung in die eine oder andere der beiden genannten Richtungen steuern, wobei eines der Organe das Regeln der Gesamtdurchflußmenge der Mischung gewährleistet, indem es den freien Querschnitt der Öffnungen (23, 24) von Null ausgehend und mit einem zu den beiden Querschnitten linearen Proportionalitätsfaktor in die gleiche Richtung verändert und wobei das andere Organ das Regeln des Mischungsverhältnisses gewährleistet, indem es die genannten Freien Querschnitte in zueinander entgegengesetzter Richtung und mit dem gleichen, zu den beiden Querschnitten linearen Proprotionalitätsfaktor verändert, wobei die beiden Zuleitungen durch eine Differentialsteuerung (15), die von der Steuerungsvorrichtung (3, 4 ; 15) umfaßt wird und die Mittel zur Regulierung des Druckverhältnisses der beiden von den genannten Durchlässen zuströmseitigen Fluida auf den gewünschten Wert umfaßt, geregelt werden.

2. Vorrichtung zum Mischen zweier unter Druck stehender Gase, umfassend eine Zuleitung (1, 2) für jedes der beiden Gase, eine Drucksteuerungsvorrichtung (3, 4), die es ermöglicht, jedes der beiden Gase unter einem bestimmten Druck bei einem regulierbaren, in der Leitung vorgesehenen Durchlaß (7, 8) austreten zu lassen, wobei die beiden Durchlässe in eine Mischkammer (9) münden, und zwar über zwei in einer eine Seitenwand dieser Kammer bildenden Platte (22) vorgesehene Öffnungen (23, 24), eine Verschlußvorrichtung (25, 26), die parallel zu der genannten Platte versetzbar ist, wobei die übereinanderliegenden Teile der Verschlußvorrichtung und die Öffnungen der Platte die genannten Durchlässe (7, 8) bilden, wobei die Öffnungen (23, 24) der Platte die Form eines Parallelogrammes haben, dessen Seiten in zwei Richtungen verlaufen, zwei mit einer Einstellvorrichtung zusammenwirkende Regelorgane, die jeweils die Versetzung der Verschlußvorrichtung in die eine oder andere der Beiden genannten Richtungen steuern, wobei eines der Organe das Regeln der Gesamtdurchflußmenge der Mischung gewährleistet, indem es den freien Querschnitt der Öffnungén (23, 24) von Null ausgehend und mit einem zu den beiden Querschnitten linearen Proportionalitätsfaktor in die gleiche Richtung verändert, wobei die Verschlußvorrichtung mit zwei separaten Platten (25, 26) versehen ist, wobei jede Platte eine Öffnung aufweist und wobei Mittel (53, 56 ; 54, 55) vorgesehen sind, um jede dieser Platten in eine der genannten Richtungen zu versetzen, wobei Mittel (52) zur Regulierung des Proportionalitätsfaktors es ermöglichen, die Durchflußkoeffizienten der zu mischenden Fluida zu berücksichtigen.

3. Vorrichtung nach Anspruch 2, dadurch gekennzeichnet, daß die genannten Steuerungsmittel der Platten elektrische Schrittmotoren umfassen.

4. Vorrichtung nach Anspruch 2, dadurch gekennzeichnet, daß sie mechanische Mittel zur Koordinierung der Versetzungen der beiden Platten in jede der genannten Richtungen umfaßt.

5. Vorrichtung nach Anspruch 4, dadurch gekennzeichnet, daß die Versetzung der Platten von einem der Wirkung einer Steuerungschraube ausgesetzten Schieber gesteuert wird, wobei dieser Schieber mit einem anderen Schieber zur Steuerung der anderen Platte über eine Hebelvorrichtung verbunden ist, deren Übersetzungsverhältnis regulierbar ist, um die Festlegung eines proportionalen Verhältnisses der Versetzungen dieser beiden Schieber zu ermöglichen.

# FIG. 1

# FIG. 2

1

FIG. 3

FIG. 4

# FIG. 5